# EUROPÄISCHE PATENTSCHRIFT

(11) **EP 1 545 231 B1**
(45) Veröffentlichungstag und Bekanntmachung des Hinweises auf die Patenterteilung: **05.03.2008**
(21) Anmeldenummer: 03748025.8
(22) Anmeldetag: 13.09.2003
(51) Int. Cl.: A23G 3/36, A61K 9/00

(54) **CALCIUM ENTHALTENDE SÜSSIGKEIT**
SWEET CONTAINING CALCIUM
FRIANDISE CONTENANT DU CALCIUM

(30) Priorität: 23.09.2002 DE 10249831
(43) Veröffentlichungstag der Anmeldung: 29.06.2005
(73) Patentinhaber: Sus Tech GmbH & Co. KG, 64287 Darmstadt (DE)
(72) Erfinder: SCHECHNER, Gallus, 64285 Darmstadt (DE); BRAUNBARTH, Carola, 64380 Rossdorf (DE); POTH, Tilo, 69469 Weinheim (DE); FRANKE, Holger, 65462 Ginsheim-Gustavsburg (DE)
(74) Vertreter: Ulbrich, Carola
(86) Internationale Anmeldenummer: PCT/EP2003/010214
(87) Internationale Veröffentlichungsnummer: WO 2004/028263

(56) Entgegenhaltungen:
- EP-A- 0 091 611
- EP-A- 0 414 932
- WO-A-02/49578
- WO-A-02/064112
- WO-A-03/059082
- US-A- 3 655 866
- US-A- 4 327 077
- US-A- 5 882 631
- US-A1- 2001 033 831

## Beschreibung

Die Erfindung betrifft eine Süßigkeit, die Komposite aus schwer wasserlöslichem Calciumsalz und einer Proteinkomponente enthält und wobei das schwer wasserlösliche. Calciumsalz eine Teilchengröße von 5 bis 300 nm aufweist.

Der Verzehr von zuckerhaltigen Lebensmitteln ist eine der Hauptursachen für das Auftreten von Karies. In den meisten Fällen wird auf das Putzen der Zähne nach dem Genuss von Süßigkeiten einfach verzichtet. Der in Süßigkeiten enthaltene Zucker dient Bakterien der Mundhöhle als Nährstoff, die einerseits durch bakterielle Abbauprodukte (insbesondere organische Säuren wie Milch-, Ameisen-oder Essigsäure) und andererseits eine vermehrte Plaquebildung für die Entstehung von Karies verantwortlich sind.

Daher werden in bestimmten Süßigkeiten, wie z.B. einigen Kaugummis oder Bonbons sogenannte Zuckeraustauschsstoffe, insbesondere Zuckeralkohole wie Sorbit, Isomalt und Xylit eingesetzt. Dadurch wird zwar die Bildung von kariesverursachenden Säuren verhindert oder zumindest vermindert, einen positiven Einfluss auf die allgemeine Zahngesundheit können diese Süßigkeiten aber nicht aufweisen.

Die Verwendung von Zuckerersatzstoffen in vielen unterschiedlichen Lebensmitteln ist insofern kaum sinnvoll, da diese Zuckeralkohole bei empfindlichen Menschen (insbesondere bei Kindern) und/oder in größeren Mengen genossen, eine abführende Wirkung zeigen. Ein Ersatz von Zucker durch Zuckeraustauschstoffe in nahezu allen Süßigkeiten, um die zahnschädigende Wirkung von Zucker zu verhindern, ist deshalb nicht möglich.

Der Zahnschmelz sowie das Stützgewebe der Knochen bestehen überwiegend aus dem Mineral Hydroxylapatit. Die Zugabe von Calcium- und/oder Phosphatsalzen in Kaugummis oder Bonbons soll dazu dienen, die Remineralisierung des Zahnschmelzes zu verbessern und damit der schädigenden Wirkung von Zucker entgegenzuwirken.

Eine entsprechende Zusammensetzung zum Reinigen der Mundhöhle und Zähne ist in der Schrift DE 196 29 167 offenbart, die neben Isomalt, Carbonaten und Citraten 0,1 bis 5 Gew.-% Phosphate als säurebindende Komponente enthält. Die einzusetzenden Phosphate weisen dabei ein Korngrößenspektrum zwischen 100 und 400 µm Durchmesser auf.

Nachteilig an diesen Zusammensetzungen ist, dass die Zugabe von herkömmlichen gemahlenen Calcium- und/oder Phosphatsalzen einen körnigen bzw. sandigen Geschmack im Mund hinterlassen. Insbesondere in Schmelzen von Zucker oder Zuckerersatzstoffen führen Calcium- und/oder Phosphatsalze mit einer Korngröße im Mikrometerbereich zu einer verstärkten Kristallisation des Zuckers, wodurch eine polykristalline, schwer zu verarbeitende Masse ohne den einheitlichen Materialcharakter eines Bonbons resultiert. Ebenso ist mit mikrokristallinen Substanzen keine ausreichende Remineralisierung des Zahnmaterials zu erhalten.

Die WO 97/10801 offenbart den Einsatz eines bakterizid wirkenden Polypeptids (Nisin) mit zuckerhaltigen Lebensmitteln, um damit beim Zuckerkonsum kariesfördernde Bakterien wie *Streptococcus mutans* zu bekämpfen. Ein großer Nachteil dabei ist, dass neben den kariesfördernden Bakterien auch andere Mikroorganismen der gesunden Mundhöhlenflora beeinträchtigt werden.

Ein weiterer Ansatz zur Förderung der Zahngesundheit ist der Zusatz von Phosphaten und/oder Calciumsalzen zu Mundwässern und Zahnpasten. Nachteilig ist, dass die Calcium- und/oder Phosphatsalze bei den genannten Verwendungen in der Regel nach kurzer Zeit aus dem Mund herausgespült wird, sodass die Verweildauer in der Mundhöhle sehr gering ist. Darüber hinaus werden entsprechende Präparate i.d.R. nicht nach dem Genuss von Speisen, insbesondere von Süßigkeiten, während des Tagesverlaufs angewendet, sondern kommen vorwiegend nur morgens und/oder abends zum Einsatz. Der kariogenen Wirkung von Süßwaren wird daher nur ungenügend abgeholfen.

In der US-A-5 882 631 werden Formulierungen für Zahnpasten oder Kaugummis beschrieben, die poröses Calciumcarbonat mit Teilchengrößen im Bereich von 0,05 bis 0,5 µm sowie gegebenenfalls Alkalimetallfluoride enthalten. Die EP-A-0 091 611 betrifft einen Antikaries-Kaugummi, der neben Natriumfluorid, Calciumcitrat, Tricalcium-bis-orthophosphat und einer Grundmasse ein Proteinprodukt (Zein G-200) enthält, um eine Ablagerung von Fluorid in der Knochensubstanz zu verhindern.

Die Aufgabe der vorliegenden Erfindung ist es, alternative Süßwaren bereitzustellen, die einen guten Geschmack und zusätzlich einen positiven Nutzen für die Zahngesundheit während und/oder kurz nach deren Genuss aufweisen.

Diese Aufgabe wird gelöst durch eine Süßigkeit, dadurch gekennzeichnet, dass sie Komposite aus schwer wasserlöslichem Calciumsalz und einer Proteinkomponente enthält, wobei das schwer wasserlösliche Calciumsalz eine Teilchengröße von 5 bis 300 nm aufweist und ausgewählt ist aus Fluorapatit, Hydroxylapatit und Fluordotiertem Hydroxylapatit.

Als in Wasser schwerlösliches Calciumsalz sollen solche Salze verstanden werden, die bei 20°C zu weniger als 0,1 Gew.-% (1g/l) in Wasser löslich sind. Solche geeigneten Salze sind z.B. Calciumhydroxyphosphat (Ca₅[OH(PO₄)₃]) bzw. Hydroxylapatit, Calciumfluorphosphat (Ca₅[F(PO₄)₃]) bzw. Fluorapatit und fluordotierter Hydroxylapatit der Zusammensetzung Ca₅(PO₄)₃(OH,F).

Das wenig bzw. schwer wasserlösliche Calciumsalz weist erfindungsgemäß eine Teilchengröße bzw. Teilchenfeinheit von 5 bis 300 nm auf. Als Teilchenfeinheit soll hier der Durchmesser der Teilchen in Richtung ihrer größten Längenausdehnung verstanden werden. Die mittlere Teilchenfeinheit bezieht sich auf einen volumengemittelten Wert. Die erfindungsgemäßen Nanopartikel besitzen ein größeres Oberflächen/Volumenverhältnis als die mikrokristallinen Teilchen und zeichnen sich durch eine höhere Reaktivität im Vergleich zu diesen aus. Sie können daher besser zur Remineralisierung von entmineralisiertem Zahnmaterial eingesetzt werden. Unter Remineralisierung ist die Wiedereinlagerung von Ionen in Knochenmaterial, also das Auffüllen von Fehlstellen innerhalb des bestehenden Zahnhartgewebes, wie Schmelz und Dentin, zu verstehen.

Überraschenderweise wurde darüber hinaus gefunden, dass sich durch Zugabe der Komposite zusätzlich auf dem Zahn neue Schichten eines biomimetischen Materials bilden können. Dieses Material ist dem natürlichen Zahnhartgeweben chemisch und strukturell sehr ähnlich. Es werden daher nicht nur Fehlstellen innerhalb der Kristallstruktur ausgeglichen, wie es bei der Remineralisierung des Zahnmaterials geschieht, sondern auch neues, am Zahn anhaftendes, in seiner Nanostruktur dentinähnliches Material erzeugt. Diese Neuentstehung von biomimetischem Material wird im weiteren als Neomineralisierung bezeichnet werden.

Als mineralisierender Wirkstoff eignet sich erfindungsgemäß ein feinteiliges, in Wasser schwerlösliches Calciumsalz, welches ausgewählt ist aus Hydroxylapatit, Fluorapatit, Fluor-dotiertem Hydroxylapatit und Gemischen davon. Diese Calciumsalze können sich am besten am Zahnmaterial anlagern und eine Mineralisierung desselben bewirken.

Unter Kompositmaterialien werden erfindungsgemäß Verbundstoffe verstanden, die ein schwer wasserlösliches Calciumsalz und eine Proteinkomponente umfassen und mikroskopisch heterogene, makroskopisch aber homogen erscheinende Aggregate darstellen.

Die in den Kompositmaterialien vorliegenden feinteiligen Calciumsalz-Primärteilchen können auch von einem oder mehreren Oberflächenmodifikationsmitteln umhüllt sein.

Dadurch kann beispielsweise die Herstellung von Kompositmaterialien in solchen Fällen erleichtert werden, bei welchen sich die nanopartikulären Calciumsalze schwer dispergieren lassen. Das Oberflächenmodifikationsmittel wird an die Oberfläche der Nanopartikel adsorbiert und verändert sie dergestalt, dass die Dispergierbarkeit des Calciumsalzes zunimmt und die Agglomeration der Nanopartikel verhindert wird.

Darüber hinaus kann durch eine Oberflächenmodifikation die Struktur der Kompositmaterialien sowie die Beladung von weiteren Komponenten mit dem nanopartikulären Calciumsalz beeinflusst werden. Auf diese Weise ist es bei der Anwendung der Kompositmaterialien in Mineralisationsprozessen möglich, Einfluss auf den Verlauf und die Geschwindigkeit der Re- und der Neomineralisierung (erfindungsgemäß unter dem Begriff Mineralisierung zusammengefasst) zu nehmen.

Unter Oberflächenmodifikationsmitteln sind Stoffe zu verstehen, welche an der Oberfläche der feinteiligen Partikel physikalisch anhaften, mit diesen jedoch nicht chemisch reagieren. Die einzelnen an der Oberfläche adsorbierten oder gebundenen Moleküle der Oberflächenmodifikationsmittel sind im wesentlichen frei von intermolekularen Bindungen untereinander. Unter Oberflächenmodifikationsmitteln sind insbesondere Dispergiermittel zu verstehen. Dispergiermittel sind dem Fachmann auch unter den Begriffen Tenside und Schutzkolloide bekannt. Geeignete Tenside oder polymere Schutzkolloide können der deutschen Patentanmeldung DE 198 58 662 A1 entnommen werden.

Die Herstellung der erfindungsgemäßen Kompositmaterialien, in weichen die Primärpartikel der Calciumsalze oberflächenmodifiziert sind, kann nach analogen Fällungsverfahren wie vorstehend beschrieben erfolgen, wobei jedoch die Fällung der nanopartikulären Calciumsalze oder der Kompositmaterialien in Gegenwart eines oder mehrerer Oberflächenmodifikationsmittel erfolgt.

Gemäß einer bevorzugten Ausführungsform weist das wenig bzw. schwer wasserlösliche Calciumsalz eine Teilchengröße bzw. Teilchenfeinheit von 5 bis 100 nm auf. Ein Vorteil dieser besonders geringen Teilchengrößen bzw. -feinheiten besteht darin, dass diese Primärteilchen überraschenderweise eine besonders effektive Remineralisierung der Zähne zeigen und darüber hinaus die Fähigkeit aufweisen, neue Schichten von dem Zahnhartgewebe sehr ähnlichem Material zu bilden.

Gemäß einer besonders bevorzugten Ausführungsform weisen die erfindungsgemäßen Calciumsalze eine längliche, insbesondere stäbchen- oder nadelähnliche Form auf. Dies hat den besonderen Vorteil, dass sie der Form der biologischen Apatite (z.B. Knochen- bzw. Dentinapatite) sehr ähnlich sind und daher eine besonders gute Fähigkeit zur Re- und Neomineralisierung aufweisen. Solche Calciumsalze lassen sich z.B. nach dem aus DE 198 58 662 A1 bekannten Verfahren in Form stäbchenförmiger Primärteilchen herstellen.

Nach einer bevorzugten Ausführungsform sind 0,01 bis 2 Gew.-% Komposite enthalten. Es ist bevorzugt insbesondere 0,1 bis 1 Gew.-% Komposite in der erfindungsgemäßen Süßigkeit einzusetzen.

Proteine können an die Oberfläche der Nanopartikel adsorbiert werden, wodurch ein Kompositmaterial aus Protein und schwer wasserlöslichem Calciumsalz entsteht. Überraschenderweise wurde gefunden, dass die Komposite aus schwer wasserlöslichem Calciumsalz mit Proteinen neben einer Remineralisation des Zahns auch in der Lage sind, das Ausmaß größerer Schäden im Zahndentin oder Zahnschmelz durch die Bildung vollständig neuer Kristalle zu verringern (Neomineralisierung).

Insbesondere wird eine Koagulation und Agglomeration der Calciumsalze durch die adsorbierten Proteine verhindert und das Kristallwachstum verlangsamt. Bei der Mineralisation eines Zahns, insbesondere bei der Neomineralisierung, ist es von großem Vorteil, wenn kein unkontrolliertes Kristallwachstum stattfindet, welches nur ein lockeres Kristallgefüge ausbilden könnte. Durch das Proteingerüst kann das Kristallwachstum gebremst und kontrolliert ablaufen. So wird ein besonders dichtes und festes Kristallgefüge gebildet.

Bei der natürlichen Entstehung von Knochenmaterial wie z.B. des Zahnschmelzes und -dentins bewirkt eine Proteinmatrix die geordnete Anlagerung von Hydroxylaptit im Zahn oder Knochen, die aus hauptsächlich aus Kollagen sowie anderen Proteinen besteht. Mit den Kompositen aus schwerlöslichern Calciumsalz und Proteinen verläuft die Mineralisierung ähnlich wie die Biomineralisierung und führt damit zu einem besonders positiven Effekt auf die Zahngesundheit beim Genuss der erfindungsgemäßen Süßigkeit.

Die in der erfindungsgemäßen Süßigkeit enthaltene Proteinkomponente ist insbesondere ausgewählt aus Proteinen, Proteinabbauprodukten und Derivaten von Proteinen oder Proteinabbauprodukten.

Als Proteine kommen dabei alle Proteine unabhängig von ihrer Herkunft in Frage, also sowohl tierische wie pflanzliche Proteine. Geeignete tierische Proteine sind z.B. Kollagen, Fibroin, Elastin, Keratin und Albumin. Geeignete pflanzliche Proteine sind z.B. Weizen- und Weizenkeimproteine (Gluten), Reisprotein, Sojaprotein, Haferprotein, Erbsenprotein, Mandelprotein und Kartoffelprotein. Auch Einzellerproteine wie z.B. Hefeprotein oder Bakterienproteine sind geeignet.

Erfindungsgemäß bevorzugte Proteine sind tierische Produkte wie Kollagen und Keratin.

Das Protein kann aber ebenfalls aus einer pflanzlichen oder marinen Quelle ausgewählt sein.

Als Proteinabbauprodukte werden solche Produkte verstanden, die durch hydrolytischen, oxidativen oder reduktiven Abbau von wasserunlöslichen Proteinen zu Oligo- und Polypeptidstrukturen mit niedrigerem Molekulargewicht und mit einer verbesserten Wasserlöslichkeit erhältlich sind.

Der hydrolytische Abbau wasserunlöslicher Proteine ist die wichtigste Abbaumethode; sie kann unter dem katalytischen Einfluss von Säuren, Alkalien oder von Enzymen erfolgen. Bevorzugt geeignet sind vor allem solche Proteinabbauprodukte, die nicht weiter abgebaut sind als zur Erlangung der Wasserlöslichkeit erforderlich.

Zu den wenig abgebauten Proteinhydrolysaten zählt beispielsweise die im Rahmen der vorliegenden Erfindung bevorzugte Gelatine, welche Molmassen im Bereich von 15000 bis 400000 D aufweisen kann. Gelatine ist ein Polypeptid, das vornehmlich durch Hydrolyse von Kollagen unter sauren oder alkalischen Bedingungen gewonnen wird. Besonders bevorzugt ist unter sauren oder stark sauren Bedingungen gewonnene Gelatine. Die Gelstärke der Gelatine ist proportional zu ihrem Molekulargewicht, d. h., eine stärker hydrolysierte Gelatine ergibt eine niedriger viskose Lösung. Die Gelstärke der Gelatine wird in Bloom-Zahlen angegeben. Bei der enzymatischen Spaltung der Gelatine wird die Polymergröße stark erniedrigt, was zu sehr niedrigen Bloom-Zahlen führt.

Unter Derivaten von Proteinen und Proteinabbauprodukten werden chemisch modifizierte Proteine oder Proteinhydrolysate verstanden, die z.B. durch Acylierung freier Aminogruppen, durch Anlagerung von Ethylen- oder Propylenoxid und Hydroxyl-, Amino- oder Carboxylgruppen oder durch Alkylierung von Hydroxylgruppen des Proteins oder Proteinabbauproduktes oder eines Hydroxyalkylderivats davon, z.B. mit Epoxypropyl-trimethylammoniumchlorid oder 3-Chlor-2-hydroxypropyl-trimethylammoniumchlorid, erhältlich sind.

In einer besonders bevorzugten Ausführung ist die Proteinkomponente ausgewählt aus Gelatine, Casein, deren Hydrolysaten und Gemischen davon. Es sollte bevorzugt eine Proteinkomponente in einer Menge von wenigstens 1 Gew.-%, bevorzugt von 1 bis 50, insbesondere von 20 bis 40 Gew.-%, enthalten sein.

In den erfindungsgemäßen Kompositen liegen die Primärpartikel der Calciumsalze an das Gerüst der Proteinkomponente assoziiert vor. Der Anteil der Proteinkomponenten in solchen Kompositmaterialien liegt zwischen 0,1 und 50 Gew.-% bevorzugt jedoch zwischen 1,0 und 45 Gew.-%, insbesondere 20 bis 40 Gew.-% bezogen auf das Gewicht des Kompositmaterials.

Geeignet sind Kompositmaterialien, bei denen die feinteiligen schwerlöslichen Calciumsalze mit Teilchenfeinheiten von 5 bis 300 nm zusammen mit feinteiligen Proteinen, Proteinhydrolysaten oder Derivaten davon eine räumliche Struktur derart bilden, dass die feinteiligen Calciumsalze der Proteinstruktur aufgelagert sind, diese quasi räumlich abbilden. Aus solchen bevorzugt geeigneten nanopartikulären Calciumsalzen und Proteinkomponenten bestehende Kompositmaterialien führen zu einer besonders guten Mineralisierung der Zähne beim Genuss der erfindungemäßen Süßigkeit.

Besonders gut können sich schwer wasserlösliche Calciumsalze in Stäbchenform an die Proteinketten anlagern. Dies führt zu einem deutlich verbesserten Zusammenhalt des Kompositmaterials. Geeignet sind dabei Primärpartikel mit einer Teilchenfeinheit von 5 bis 300 nm, da diese besonders kleinen Kristallite der Form biologischer Apatite sehr ähnlich und sich auch wegen der geringen Größe noch besser an die Proteinketten anlagern können. Diese Komposite führen dadurch zu einer besonders effektiven Mineralisierung von Zähnen.

Erfindungsgemäß geeignete Kompositmaterialien können durch Fällung aus wäßrigen Lösungen wasserlöslicher Calciumsalze mit wäßrigen Lösungen wasserlöslicher Phosphat und/oder Fluoridsalze in Gegenwart von Proteinkomponenten nach unterschiedlichen Verfahren hergestellt werden, wie sie bereits in der deutschen Patentanmeldung DE 199 30 335 beschrieben sind.

Für die Herstellung der erfindungsgemäßen Süßigkeit wird der Wirkstoff, also das Kompositmaterial aus dem schwerlöslichen Calciumsalz und einer Proteinkomponente, einfach zugegeben und eingerührt.

Gemäß einer besonderen Ausführungsform können die in der erfindungsgemäßen Süßigkeit bevorzugt zu verwendenden Zuckerarten Mono-, Di- und Oligosaccharide wie bspw. Dextrose, Fructose und Saccharose, Glucosesirup, flüssige Zucker und verwandte Erzeugnisse, getrockneter Glucosesirup und andere Stärkeverzuckerungserzeugnisse sowie darüber hinaus auch Zuckeraustauschstoffe, insbesondere Zuckeralkohole, sein.

Trotz der zum Teil zahnschädigenden Inhaltsstoffe (Zucker) führt der Konsum der erfindungsgemäßen Süßigkeit neben dem Genusserlebnis zur Zahnpflege und Zahnschonung sowie darüber hinaus zur Mineralisierung des Zahnschmelzes und/oder des Dentins. Auf die, nicht immer nach dem Genuss von Süßigkeiten mögliche, aber zur Gesunderhaltung der Zähne bisher nötige Zahnpflege, üblicherweise mit Zahnbürste, Zahnpasta und/oder Mundwasser, kann so ohne Schaden für die Zähne durch den Süßigkeitenverzehr verzichtet werden.

Erfindungsgemäß bevorzugte Zuckeralkohole sind Sorbit bzw. Sorbitsirup, Mannit, Xylit, Lactit, Isomalt, Maltit bzw. Maltitsirup. Diese Stoffe haben den Vorteil, dass sie pro 100 g weniger Kalorien enthalten und darüber hinaus der Abbau der Zuckeralkohole zu Säuren durch einige Bakterien der Mundhöhle so langsam erfolgt, dass sie nicht kariogen wirken. Der erfindungsgemäße Zusatz von Kompositen in zuckeraustauschstoffhaltigen Süßigkeiten bewirkt eine Mineralisierung der Zähne während und/oder nach dem Genuss der Süßigkeit und trägt somit besonders zum Erhalt gesunder Zähne bei.

Nach einer weiteren bevorzugten Ausführungsform ist die Süßigkeit ausgewählt aus der Gruppe der Zuckerwaren. Zuckerwaren sind eine vielfältige Gruppe von Lebensmitteln, die gemäß der Richtlinie für Zuckerwaren des Bundesverbandes der deutschen Süßwarenindustrie durch Zucker und/oder andere verkehrsübliche Zuckerarten, ggf. Zuckeralkohole, Süßstoffe oder andere süße Zutaten meist einen ausgeprägt süßen Geschmack haben. Zuckerwaren sind auch Füllungs-, Glasur- oder Konfektmassen, sowie Schichten, Überzüge oder Füllungen von Süßwaren oder feinen Backwaren. Zu den Zuckerwaren zählen auch zuckerfreie Zuckerwaren. Bei diesen wird der süße Geschmack durch Zuckeralkohole und/oder Süßstoffe erzielt.

Bevorzugte Zuckerwaren sind insbesondere Hart- und Weichkaramellen, Gummibonbons, Geleeerzeugnisse, Schaumzuckerwaren, Lakritzwaren, Dragees, Pastillen und kandierte Früchte.

Karamellen (auch Bonbons genannt) erhalten ihre Eigenart im allgemeinen durch Einkochen einer Lösung von Zuckerarten und/oder Zuckeralkoholen und werden unter Verwendung von geruch- und geschmackgebenden Stoffen, färbenden und/oder die Beschaffenheit beeinflussenden Stoffen mit oder ohne Füllung in verschiedenen Formen hergestellt. Die Beschaffenheit der Karamellen reicht von Hartkaramellen, z.B. Drops bis zu den Weichkaramellen, die sich insbesondere durch ihren Restwassergehalt unterscheiden. Dieser kann bei Hartkaramellen bis zu etwa 5 Gew.-% und bei Weichkaramellen bis zu etwa 15 Gew.-% betragen. Weichkaramellen sind beispielsweise die elastisch-kaugummiähnlichen Kaubonbons oder die weichen, gut kaubare, z.T. klebrigen Toffees. Je nach Herstellungsart werden z.B. geschnittene, geprägte, gegossene und kaschierte Bonbons unterschieden.

Geleeerzeugnisse im erfindungsgemäßen Sinn sind elastisch-weiche Zuckerwaren mit abbeißbarer Konsistenz (z.B. Gelee-Früchte). Ebenso erfindungsgemäße Süßigkeiten sind Gummibonbons wie z.B. Fruchtgummis, Gummibärchen, Weingummis oder Gummipastillen. Sie sind zäh-elastisch und kaubar-fest und werden ebenso wie die Geleeerzeugnisse aus Zuckerarten und/oder Zuckeralkoholen, Geliermitteln (wie Agar, Pektin oder Gummi arabicum), Gelatine und/oder Stärke (ggf. modifiziert) hergestellt. Wachse oder pflanzliche Öle können zusätzlich als Trenn- und Glanzmittel eingesetzt werden.

Lakritzwaren werden aus einem Gemisch von Zuckerarten und/oder Zuckeralkoholen, Gelatine und/oder (auch modifizierter) Stärke und/oder Mehl und/oder Gelier- und Verdickungsmittel sowie diversen Aromen hergestellt. Darüber hinaus enthalten Lakritzwaren als charakteristische Zutat mindestens 3 % Süßholzsaft (Succhus liquiritiae; in der handelsüblichen Trockenform). Die Zugabe von bis zu 8 Gew.-%, insbesondere bis zu 2 Gew.-% Salmiaksalz führt zu sogenannten Starklakritzen.

Dragees bestehen aus einer glatten oder gekrausten, mit Zuckerarten und/oder Zuckeralkoholen, Schokoladenarten und/oder anderen Glasuren im Dragierverfahren hergestellte Decke und einem flüssigen, weichen oder festen Kern. Beim Dragierverfahren wird bspw. eine gesättigte Zuckerlösung feinverteilt aus einer Düse auf die in Dragierkesseln rotierenden Kern eingesprüht. Der Zucker kristallisiert durch die gleichzeitig eingeblasene warme Luft aus und bildet nach und nach viele dünne Schichten um den Kern. Enthält die Zuckerschicht keine Restfeuchte wird die Süßigkeit als Hartdragee bezeichnet, bei Weichdragees können dagegen etwa 6 bis 12, insbesondere 8 bis 10 Gew.-% Restfeuchte gegeben sein. Dragees werden äußerlich häufig mit einer dünnen Trenn- und Glanzschicht versehen, wobei die Glanzschicht durch Behandlung mit wachsartigen Stoffen, wie bspw. Carnaubawachs, entsteht. Insbesondere werden die Beschaffenheit beeinflussende Stoffe, wie z.B. Stärke sowie färbende, geruch-und geschmackgebende Stoffe eingesetzt.

Komprimate oder Pastillen werden im Tablettier- oder Puderguss- oder Extrudierverfahren hergestellt und enthalten neben den Zuckerarten und/oder Zuckeralkoholen ggf. geringe Mengen an Binde- und Gleitmitteln.

Gemäß einer besonders bevorzugten Ausführungsform ist die Süßigkeit eine Hart-oder Weichkaramelle oder ein Dragee. Diese Süßigkeiten haben den Vorteil, dass sie über eine längere Zeit im Mund gehalten werden und die in der Süßigkeit enthaltenen Komposite erst nach und nach freigesetzt werden. Die mineralisierende, und insbesondere die neomineralisierende Wirkung wird dadurch besonders gefördert.

Insbesondere bei Süßigkeiten aus Schmelzen von Zucker und/oder Zuckeralkoholen, wie beispielsweise Karamellen, kann der Wirkstoff vorteilhafterweise direkt in die Schmelze eingearbeitet werden. Überraschenderweise kommt es dabei in den Schmelzen nicht zu einer Kristallisation des Zuckers, die bei der Zugabe von herkömmlichem, gemahlenen Apatit zu einer polykristallinen, schwer zu verarbeitenden Masse führt. Der bei grobkörnigerem Apatit auftretende sandige Geschmack konnte, ebenfalls nicht festgestellt werden.

Besonders bevorzugt sind die Hartkaramellen wie z.B. Bonbons, Drops, Zuckerstangen oder Lutschern, die besonders lange im Mund verbleiben, wodurch das schrittweise Freisetzen der Komposite optimal gegeben ist.

Gemäß einer weiteren bevorzugten Ausführungsform ist die erfindungsgemäße Süßigkeit gefüllt. Süßigkeiten mit einem festen, gelförmigen oder flüssigen Kern ermöglicht u.a. das Hinzufügen von weiteren Geschmackskomponenten in diesem Kern. Ebenso können dadurch Wirkstoffe eingebracht werden, die auf direkte Weise (bspw. durch Zumischung) nicht ohne Wirkungsverminderung oder -verlust eingearbeitet werden können. In Bonbons können u.a. Vitamine oder Alkohol in solche Füllungen eingearbeitet werden.

Besonders bevorzugt, ist, dass die Füllung die Komposite enthält. Die in der Füllung enthaltenen Komposite können so auch in solche Süßigkeiten eingearbeitet werden, bei denen die Gefahr eines Wirkungsverlustes durch die Eigenschaften der Süßigkeit oder der Herstellung derselben besteht. Diese Füllung kann insbesondere eine Suspension, ein Gel oder ein Sirup sein. Insbesondere können die Suspensionen oder Gele auf Wasserbasis hergestellt sein, um eine gute Verträglichkeit zu gewährleisten. Ein Zusatz von lebensmittelgeeignete Dispergier- oder Netzmitteln kann dazu dienen, die Komposite in der Suspension zu halten. Als Gelbildner eignen sich insbesondere organische Verdickungsmittel sowie deren Derivate.

Neben synthetischen organischen Verdickern sind besonders natürliche organische Verdicker, insbesondere Agar-Agar, Carrageen, Tragant, Gummi arabicum, Alginate, Pektine, Polyosen, Guar-Mehl, Johannisbrotbaum-Kernmehl, Stärke, Dextrine, Gelatine und Casein geeignet. Davon abgewandelte Naturstoffe sind ebenfalls bevorzugt, insbesondere Carboxymethylcellulose und andere Celluloseether, Hydroxyethylcellulose und Hydroxypropylcellulose sowie Kernmehlether. Synthetische organische Verdicker wie z.B. Polyether oder anorganische Verdicker wie Polykieselsäuren und/oder Tonmineralien (z.B. Montmorillonite, Zeolithe oder Kieselsäuren) können ebenfalls erfindungsgemäß eingesetzt werden.

Gemäß einer weiteren Ausführungsform der vorliegenden Erfindung ist die Süßigkeit ein gefüllter Kaugummi.

Kaugummis, die in die Kaumasse eingearbeitete schwer wasserlösliche Calciumsalze enthalten, setzen aber wegen ihrer klebrigen Konsistenz nur geringe Mengen des Wirkstoff frei. Durch das Aufbeißen auf den gefüllten Kaugummi wird das Calciumsalz, welches in der Füllung enthalten ist, direkt im Mund freigesetzt und kann so besser wirken als in herkömmlichen Kaugummis. Das Kaugummi fördert zusätzlich den Speichelfluss durch die ausgeführte Kaubewegung. Die kariesverursachenden Säuren werden verdünnt und so auf natürliche Art die Gesundheit des Mundraums unterstützt. Besonders zahnpflegende und - schonende Kaugummis enthalten Zuckeraustauschstoffe, insbesondere Zuckeralkohole.

Kaugummi besteht aus Zuckerarten und/oder Zuckeralkoholen, Süßstoffen, Aromen, anderen geruch- und geschmack- oder konsistenzgebenden Zutaten, Farbstoffen sowie einer wasserunlöslichen, beim Kauen plastisch werdenden Kaumasse. Daneben können die Kaugummis auch Trenn- und Überzugsmittel (wie beispielsweise Talkum) enthalten.

Kaumassen sind Gemische aus konsistenzgebenden Stoffen, den natürlichen Gummen, das sind erstarrte Säfte (Exudate) aus tropischen Pflanzen wie Chicle, Gummi arabicum, Guttapercha, Karayagummi und Traganth, Kautschuk und den thermoplastischen Kunststoffen Butadien-Styrol-Copolymerisate, Isobutylen-Isopren-Copolymerisate, Polyethylen, Polyisobutylen, Polyvinylester der unverzweigten Fettsäuren von C₂ bis C₁₈ und Polyvinylether.

Als Plastifikatoren werden Harze und Balsame eingesetzt. Zu den natürlichen Stoffen zählen Benzoeharz, Dammarharz, Kolophonium, Mastix, Myrrhe, Olibanum, Perubalsam, Sandarrak, Schellack und Tolubalsam, zu den synthetischen Cumaron-Inden-Harz, Glycerin-Pentaerythritester der Harzsäuren des Kolophoniums und deren Hydrierungsprodukte.

Zur Beeinflussung der Elastizität finden Paraffine (natürliche und synthetische) sowie Wachse Verwendung. Bei den Wachsen gibt es solche aus dem pflanzlichen Bereich wie Carnaubawachs und solche tierischen Ursprungs wie Bienenwachs oder Wollwachs, daneben solche aus dem mineralischen Bereich wie mikrokristalline Wachse, wie auch chemisch modifizierte oder synthetische Wachse. Als Weichmacher dienen Emulgatoren (z.B. Lecithine oder Mono- und Diglyceride von Speisefettsäuren) und Ester wie Glycerinacetat sowie auch Glycerin.

Zur Regulierung der Kaumassekonsistenz werden pflanzliche Hydrokolloide wie Agar-Agar, Alginsäure und Alginate, Guarkernmehl, Johannisbrotkernmehl oder Pektin zugesetzt. Zur gezielten Einstellung der Kaueigenschaften von Kaumassen werden Füllstoffe eingesetzt, das sind Carbonate von Calcium oder Magnesium, Oxide, beispielsweise Aluminiumoxid, Kieselsäure und Silicate von Calcium oder Magnesium. Stearinsäure und ihre Calcium- und Magnesiumsalze werden zur Verminderung des Haftvermögens der Kaumasse am Zahnschmelz eingesetzt.

Bevor die übrigen, für die Herstellung von Kaugummi rezepturgemäß erforderlichen Zutaten untergemischt werden, ist es erforderlich, die Kaumasse, die etwa 20-35 % (mindestens aber 15 %) des fertigen Kaugummis ausmacht, auf 50-60 °C zu erwärmen.

Nach einer weiteren bevorzugten Ausführungsform der vorliegenden Erfindung umfasst die Süßigkeit eine sich auflösende Komponente. Diese Komponente oder Matrix löst sich im Mund durch Kontakt mit dem Speichel auf. Dabei kann das Auflösen auch durch eine längere Verweilzeit im Mund (insbesondere von über fünf Minuten) und/oder Lutschen erreicht werden. Als Komponente oder Matrix ist hier beispielsweise die Zuckermatrix bzw. Grundmasse eines Bonbons, eines Gummibonbons oder auch eine Füllung zu verstehen.

Besonders bevorzugt ist es, dass sich in der sich auflösenden Komponente oder Matrix die erfindungsgemäß in der Süßigkeit enthaltenen Komposite befinden. Dies führt vorteilhafterweise dazu, dass die sich auflösende Komponente den darin befindlichen oder enthaltenen Wirkstoff im Mund freisetzen kann. Insbesondere ist dies für solche Süßigkeiten wichtig, bei denen der Wirkstoff sonst nicht in größeren Mengen freigesetzt wird.

Dies kann beispielsweise bei einem gefüllten Kaugummi vorteilhaft sein. Die Komposite werden in eine feste, gelartige oder flüssige Füllung eingearbeitet, die durch Aufbeißen auf den Kaugummi im Mund aus dem Kaugummi austritt und den Wirkstoff freisetzt. Im Falle einer flüssigen Füllung vermischt sich diese mit dem Speichel. Es ist auch möglich, dass die Komposite z.B. in granulierten Zuckerperlen in einen Kaugummi eingearbeitet werden. Ebenfalls ist es möglich, dass die Komposite als feinpudriger Staub auf die Süßigkeit aufgebracht sind beispielsweise gemeinsam mit Trennmitteln bei Kaugummis (z.B. mit Talkum) oder sauren Drops (die häufig als Schutz vor dem Verkleben z.B. mit Puderzucker bestäubt sind).

Der sich in der auflösende Komponente oder Matrix befindliche Wirkstoff bleibt nicht, wie bei der Einarbeitung in die Kaumasse eines Kaugummis, zum großen Teil in oder mit einer sich nicht auflösenden Komponente verhaftet. So wird die notwendige Wirkstoffmenge im Mund verfügbar gemacht, die vorteilhafterweise eine effektive Mineralisierung der Zähne gewährleistet.

Nach einer besonders bevorzugten Ausführungsform der Erfindung besteht die Süßigkeit im wesentlichen aus mindestens einer sich auflösenden Komponente oder Matrix. Erfindungsgemäß ist dabei besonders vorteilhaft, dass es keine Komponenten der Süßigkeit gibt, an die der Wirkstoff nach Lutschen oder Zergehen lassen im Mund weiterhin gebunden und damit nicht verfügbar für die Mineralisierung des Zahnmaterials vorliegen kann. Entsprechende Süßigkeiten können beispielsweise gefüllte oder ungefüllte Karamellen, Gummibonbons, Geleeerzeugnisse, Schaumzuckerwaren, Lakritzwaren, Dragees oder Pastillen darstellen.

Gemäß einer weiteren bevorzugten Ausführungsform enthält die Süßigkeit neben den Kompositen zusätzlich mindestens ein Fluoridsalz. Überraschenderweise wurde gefunden, dass die Zugabe von Fluorid zu einer synergistischen Verstärkung des nukleierenden Effekts der Komposite führt. Insbesondere bevorzugt ist der Zusatz von Natrium- und/oder Kaliumfluorid. Bei gleichzeitiger Zugabe von Kompositen und geringen Mengen Fluorid zeigt sich eine etwa fünffache synergistische Verstärkung. Bevorzugt sind erfindungsgemäß Mengen von 0,05 bis 0,15 Gew.-%, insbesondere von 0,08 bis 0,12 Gew.-% Fluoridsalz.

Gemäß einer weiteren bevorzugten Ausführungsform enthält die Süßigkeit Aromastoffe, Süßstoffe, Füllstoffe und/oder weitere Hilfsstoffe (wie z.B. Glyzerin oder Mineralsalze, bspw. Zn²⁺ oder Mg²⁺).

Grundsätzlich können jegliche natürlichen oder naturidentischen Aromastoffe, wie z.B. Fruchtaromen, eingesetzt werden. Diese können insbesondere in festen oder flüssigen Fruchtzubereitungen, Fruchtextrakten oder Fruchtpulvern enthalten sein. Bevorzugt sind dabei Ananas, Apfel, Aprikose, Banane, Brombeere, Erdbeere, Grapefruit, Heidelbeere, Himbeere, Maracuja, Orange, Sauerkirsch, rote und schwarze Johannisbeere, Waldmeister und Zitrone.

Auch andere Aromen, insbesondere Aromaöle wie z.B. Pfefferminzöl, Krauseminzöl, Eukalyptusöl, Anisöl, Fenchelöl, Kümmelöl und synthetische Aromaöle können eingesetzt werden. Besonders bevorzugt geschieht dies in Kräuter- und/oder Hustenbonbons sowie Kaugummis.

Weitere geschmackgebende Zusatzstoffe können u.a. sein: Milch, Joghurt, Sahne, Butter, Honig, Malz, Karamell, Lakritz, Wein, Mandel-, Pistazien-, Haselnuß- oder Walnußkerne sowie andere eiweißreiche Ölsamen und Erdnußkerne, Kokos, Kakao, Schokolade, Cola oder Vanille.

Es können auch Wirkstoffe, wie z.B. Menthol und/oder Vitamine, in der erfindungsgemäßen Süßigkeit enthalten sein. Ebenso können Organophosphonate, wie z.B. 1-Hydroxyethan-1,1-diphosphonsäure, Phosphonopropan-1,2,3-tricarbonasäure (Na-Salz) oder 1-Azacycloheptan-2,2-diphosphonsäure (Na-Salz), und/oder Pyrophosphate zugesetzt werden, die die Bildung von Zahnstein vermindern.

Süßungsmittel wie z.B. Saccharin-Natrium, Acesulfam-K, Aspartame^{®}, NatriumCyclamat, Stevioside, Thaumatin, Sucrose, Lactose, Maltose, Fructose oder Glycyrrhicin sind ebenfalls bevorzugt enthalten. Damit kann der Anteil an Zucker reduziert und trotzdem der vorwiegend süße Geschmack erhalten werden.

Als Konservierungsstoffe können alle für Lebensmittel zugelassenen Konservierungsstoffe eingesetzt werden, bspw. Sorbin- oder Benzoesäure und deren Derivate, wie z.B. Natriumbenzoat und Parahydroxybenzoat (Natriumsalz), Schwefeldioxid oder schwefelige Säure, Natrium- oder Kaliumnitrit. Farbstoffe und Pigmente zur Erreichung eines ansprechenden Aussehens können ebenfalls enthalten sein.

Ein weiterer Gegenstand der vorliegenden Erfindung ist die Verwendung von Kompositen im Sinne der vorliegenden Erfindung in Süßigkeiten, insbesondere Zuckerwaren, als Inhaltsstoff mit positiver Wirkung auf die Zahngesundheit. Insbesondere wird die die Komposite enthaltende Süßigkeit zur Zahnpflege und Zahnschonung sowie darüber hinaus zur Mineralisierung des Zahnschmelzes und/oder des Dentins eingesetzt. Einer kariösen Erkrankung der Zähne kann so durch die Verwendung von Kompositen entgegengewirkt werden. Neben der Genussbefriedigung kann so die erfindungsgemäße Süßigkeit zusätzlich zur Kariesprophylaxe verwendet werden.

Folgende Beispiele sollen die Erfindung erläutern, ohne sie darauf zu beschränken:

### Beispiel:

### 1. Herstellung der Süßigkeiten:

### 1.1 Herstellung eines Apatit-Protein-Komposits

Zur Herstellung des Apatit-Gelatine-Komposits wird 2000 ml demineralisiertes Wasser in einem auf 25 °C thermostatisierten 4 l Becherglas vorgelegt, in denen 44.10 g (0.30 Mol) CaCl₂·2H₂O (Fisher Chemicals p.a.) gelöst werden. Getrennt davon werden in 350 ml demineralisiertem Wasser 35 g Gelatine (Typ A, DGF-Stoess, Eberbach) bei etwa 50 °C gelöst. Beide Lösungen werden vereinigt und stark mit einem Propellerrührer gerührt. Der pH-Wert wird mit verdünnter wässriger Base auf 7.0 eingestellt.

Zu dieser Gelatine- und Calciumsalzlösung werden unter starkem Rühren innerhalb von 120 min 300 mL einer 0.6 M (NH₄)₂HPO4-Lösung, die vorher auf pH 7.0 eingestellt wurde, mit einer automatisierten Zugabeapparatur gleichmäßig zugepumpt. Dabei wird der pH-Wert durch die geregelte Zugabe von verdünnter wässriger Base konstant auf pH 7.0 gehalten. Nach Beendigung der Zugabe wird weiter über 24 h gerührt.

Anschließend wird die Dispersion in Zentrifugenbecher gefüllt und der Feststoffanteil durch Zentrifugieren von der Lösung getrennt. Durch fünffaches Aufschütteln des Rückstandes in demineralisiertem Wasser und anschließendes erneutes Zentrifugieren werden die Salze weitgehend ausgewaschen, so dass kein Chlorid mehr nachweisbar ist.

### 1.2 Herstellung zuckerhaltiges Bonbons:

50 g Zucker (Saccharose) werden mit 7 mL Wasser versetzt und erhitzt bis eine Schmelze erhalten wird. Es werden unter Rühren 5 mL einer 10 Gew.-%igen Dispersion des in Beispiel 1.1 hergestellten Hydroxylapatit-Protein-Komposits zugefügt. Die Masse wird weiter bis zur Karamelisierung und Braunfärbung erhitzt.

Anschließend wird schnell abgekühlt. Für diese Formulierung können zur Geschmacksverbesserung auch 3 g Butter zu Beginn beigefügt werden (Butter Scotch Candies)

Als Vergleichsprobe wird ein Bonbon hergestellt, das anstatt der Wirkstoffdispersion 0.50 g kommerziellen, mikrokristallinen Hydroxylapatit (04238, Riedel de Haen) mit einer Korngröße von ca. 15 µm enthält.

Während die komposithaltige Schmelze zu einer weitgehend glasartigen Schmelze erstarrt, wird im Falle der Schmelze, die kommerziellen Apatit enthält, ein bröckliges, polykristallines Material mit millimetergroßen Einzelkristallen erhalten. Beim Geschmackstest kann beim komposithaltigen Bonbon der Zusatzstoff nicht wahrgenommen werden, während die Referenzprobe einen deutlich sandigen Eindruck im Mund hinterlässt.

### 1.3 Herstellung zuckerfreier Bonbons:

30 g Sorbitol werden bei etwa 110 °C geschmolzen, hierzu gibt man 3 ml einer 10 Gew.-%igen Dispersion des Apatit-Protein-Wirkstoffes und rührt ihn sorgfältig ein. Die Schmelze wird schnell abgekühlt.

Zum Vergleich wird ein apatithaltiges Bonbon hergestellt, indem statt der Wirkstoffdispersion 0.3 g eines mikrokristallinen, kommerziellen Hydroxylapatitpulvers (Riedel de Haen, Korngröße 15 µm) in die Schmelze eingerührt werden.

Beim Erstarren wird im Falle der Schmelze mit dem Apatit-Protein-Komposit ein leicht trübes, glasartiges Material erhalten, während die kommerziellen Apatit enthaltende Formulierung deutlich stärker zum Kristallisieren neigt und deshalb trüb erscheint. Während im Falle der erfindungsgemäßen Bonbons keine geschmacklichen Einbußen zu bemerken sind, ist beim Bonbon, das kommerziellen Apatit enthält, ein deutlich sandiger Eindruck festzustellen.

### 1.4 Herstellung der Kaumasse:

Die Grundmasse wird auf 50 °C vorerhitzt und der Doppel-Sigma-Schaufel-Kneter auf 40 °C thermostatisiert. Die halbe Menge des Sorbits, das feste Mannit, die Grundmasse sowie das Lecithin werden miteinander 5 Minuten geknetet. Dann wird die Hälfte des Glycerins zugegeben. Nach weiteren 5 Minuten werden ein Viertel des Sorbits und die Hälfte des Glycerins zugefügt. Nach einer weiteren Minute Kneten werden ein Viertel von der Sorbitmenge sowie die andere Hälfte des Glycerins zugeben. Diese Masse wird noch 5 Minuten geknetet bevor der Maltitsirup zugegeben wird. Abschließend kommen nach weiteren 5 Minuten das Aspartam sowie das Optamint zur Masse und werden noch weitere 5 Minuten verknetet.

Die Masse wird mit Talkum bestreut und noch im warmen Zustand auf 1.5 mm Dicke ausgerollt. Aus diesen Platten werden Streifen geschnitten. Diese werden durch Pressen oder Ziehen so in ein runde Hohlform verformt, dass sie das Gel aufnehmen und anschließend verschlossen werden können.

**Tabelle 1: Kaumasse**

| Inhaltsstoffe | Menge |
|---|---|
| Kaugummi-Grundmasse Balear^{®}-T (Cafosa, Spanien) | 33 g |
| D-Sorbit (98% rein, Aldrich) | 57.50 g |
| Mannit-Pulver (ABCR Chemikalien, Karlsruhe) | 5.00 |
| Ma Maltit-Sirup (85 Gew.-%) in Wasser (HDS-Chemie Österreich) | 3.00 g |
| Glycerin, wasserfrei (Merck) | 2.00 g |
| Optamint^{®} (Haarmann & Reimer GmbH) | 1.80 g |
| Lecithin (ACROS Organics) | 0.50 g |

### 1.5 Herstellung von Apatit-Protein-Komposithaltigen Gelen:

Apatit-Gelatine-Komposit, Wasser, Glycerin und Maltitsirup werden unter starkem Rühren (400 rpm) auf 70 °C erwärmt. In der warmen Lösung wird Lecithin gelöst, danach wird Optamint^{®} zugegeben. Carboxymethylcellulose, Xylitol und Sorbit werden in einem Becherglas trocken vorgemischt und dann portionsweise bei gleichzeitiger Erhöhung der Rührgeschwindigkeit auf 750 rpm zugegeben. Nach 20 Minuten Rühren gibt man 0,35 g Benzoesäure zu und hält die Temperatur weitere 10 Minuten auf 70 °C. Abschließend wird die gefällte Kieselsäure (Sipernat^{®} 320 DS, Degussa AG) zudosiert, gleichzeitig die Rührgeschwindigkeit bis auf 1100 rpm erhöht und die Temperatur weitere 10 Minuten gehalten.

### 1.6 Herstellung von fluoridhaltigen Gelen mit Apatit-Gelatine-Komposit:

Analog zur Herstellung der fluoridfreien Gele werden auch die fluoridhaltigen Gele hergestellt. Die Hälfte der Sorbitmenge wird wie oben beschrieben zugegeben, während die andere Hälfte in einem zweiten Becherglas mit dem Natriumftuorid vorgemischt und dann ebenfalls portionsweise unter Erhöhung der Rührgeschwindigkeit auf 730 rpm zugegeben wird.

**Tabelle 2: Gel**

| | Gel ohne Fluorid | Gel mit Fluorid |
|---|---|---|
| Carboxymethylcellulose, Na-Salz Blanose^{®} CMC 9M31XF (Hercules) | 1,25g | 1,25g |
| Apatit-Gelatine-Komposit (5,90 %) in Glycerin dispergiert | 2,55g | 2,55g |
| Glycerin, wasserfrei (Merck) | 69g | 69g |
| Maltitsirup (HDS-Chemie, Österreich) | 6,3g | 6,3g |
| Deionisiertes Wasser | 51,0g | 51,0g |
| Natriumfluorid (Merck) | - | 0,45g |
| D-Sorbit, 97 %; (Aldrich) | 94g | 94g |
| Xylitol (Sigma) | 11,1g | 11,1g |
| Kieselsäure, gefällt Sipernat^{®} 320 DS (Degussa AG) | 11,75g | 11,75g |
| Lecithin (ACROS organics) | 0,25g | 0,25g |
| Optamint^{®} (Haarmann & Reimer) | 0,25g | 0,25g |
| Konservierungsmittel Benzoesäure (ACROS organics) | 0,35g | 0,35g |

### 2. pH-Messungen in künstlichem Speichel:

### 2.1 Methode:

Die Süßigkeit, die die Komposite enthält, wird in eine Salzlösung gegeben, deren Gehalt an anorganischen Salzen demjenigen von Körperflüssigkeiten wie Speichel, Blut oder Plasma entspricht (Simulated Body Fluid, SBF) und die dementsprechend bezogen auf die Ausfällung von Calciumphosphat übersättigt ist. Solche Zusammensetzungen können als Modell für Körperflüssigkeiten eingesetzt werden, wie bereits in Liu et. al, Cells and Materials (1997), 7, S. 41-51) beschrieben wurde.

Für die vorliegende Untersuchung wurde ein SBF ("Simulated Body Fluid") verwendet, das aus einer wässrigen Lösung folgender Salze besteht:

| | | | |
|---|---|---|---|
| Na⁺ | 14 mM | PO₄³⁻ | 4,7mM |
| K⁺ | 21 mM | Cl⁻ | 30 mM |
| Ca²⁺ | 1,8mM | | |

Bei 37°C wurden je 1 g der Süßigkeiten in 30 ml bzw. je 70 mg der Gele in 25 ml des SBF gelöst und die anschließende pH-Wert-Veränderung mittels einer pH-Elektrode (Inlab 410, Mettler Toledo; Meßgerät: Consort, Multi Parameter Analyzer C833) verfolgt.

### 2.2 Messergebnisse

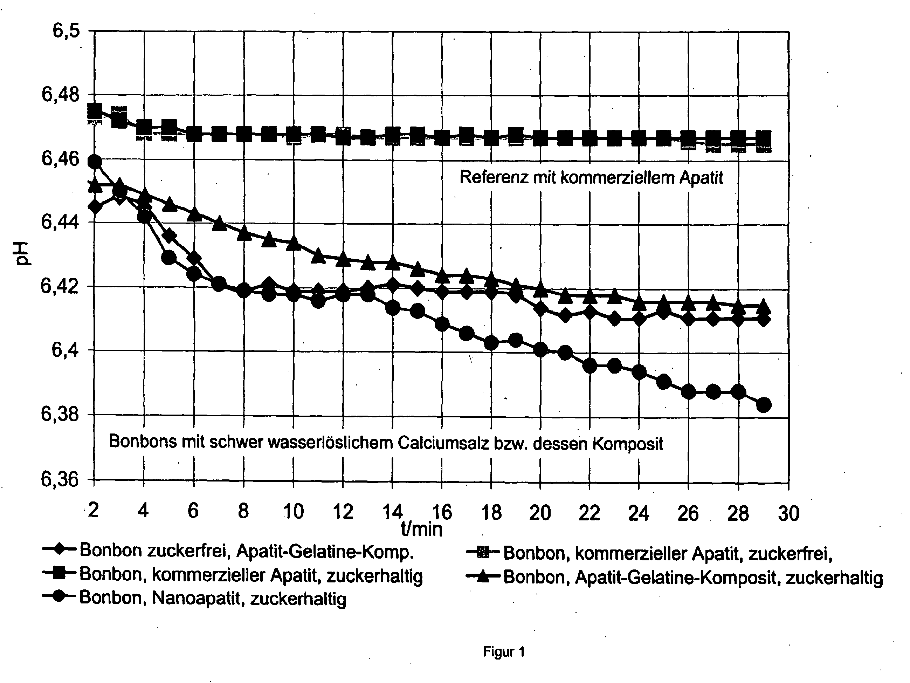

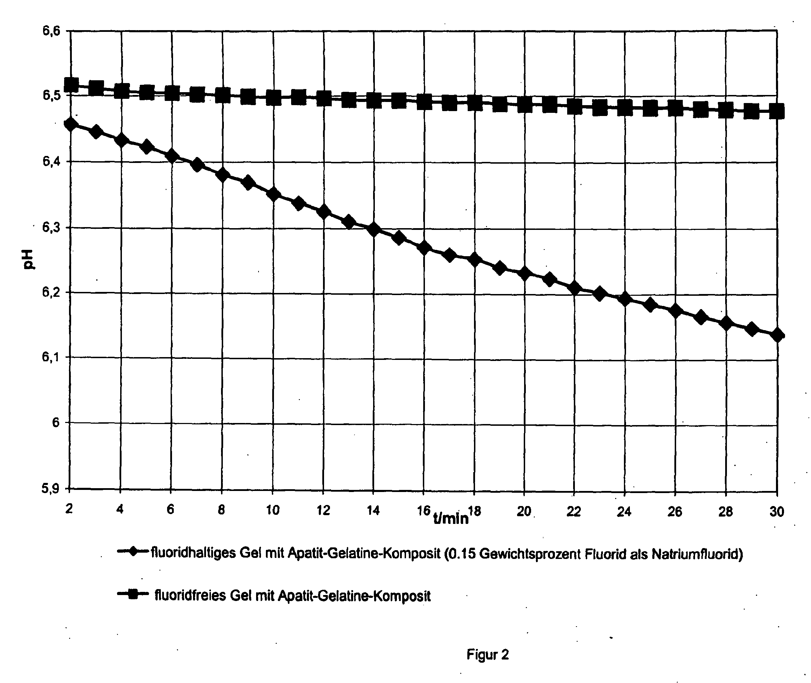

Die pH-Verläufe der Messungen zwischen 2 min und 30 min nach Zugabe sind in Fig. 1 und 2 gezeigt.

Die pH-Wert-Änderungen der zuckerfreien und/oder zuckerhaltigen Bonbons mit dem Apatit-Protein-Komposit sowie entsprechenden Bonbons mit herkömmlichem, gemahlenen Apatit sind in Fig. 1 zu erkennen.

Daraus wird deutlich, dass die Bonbons, die aus kommerziellen Apatiten hergestellt wurden, kaum zu einem Abfall des pH-Wertes führen, während die Bonbons mit den erfindungsgemäßen Calciumsalzen über einen langen Zeitraum die Abnahme des pH-Wertes zeigen.

In Fig. 2 sind die pH-Wert-Verläufe für Gele von Apatit-Protein-Kompositen in SBF gezeigt, das entweder fluoridfrei oder mit 0,0015 Gew.-% Natriumfluorid versetzt war. Ein mit geringen Mengen an Fluoridsalz versetztes Apatit-Protein-Komposit-Gel zeigt demnach einen deutlich höheren Abfall des pH-Wertes als ein Gel ohne das Fluoridsalz. Solche Gele können beispielsweise in gefüllten Bonbons oder Kaugummis eingesetzt werden.

Diese pH-Wertveränderungen sind mit einer durch die Komposite induzierten Calciumphoshat-Fällung aus dem künstlichen Speichel zu erklären, die entsprechend der folgenden Gleichung, anhand des abfallenden pH-Wertes in der "SBF" gemessen wird:

10 CaCl₂ + 6 Na₂HPO₄ + 2 H₂O → Ca₁₀(OH)₂(PO₄)₆ + 12 NaCl + 8 HCl

Die Wirkungsweise der schwerlöslichen Calciumsalze liegt (ohne auf diese Theorie beschränkt sein zu wollen) aufgrund der Ergebnisse nicht nur in der Bereitstellung von Calcium- und/oder Phosphationen zum Einbau in die Dentinkanälchen und den Zahnschmelz. Darüber hinaus ist das schwerlösliche Calciumsalz insbesondere in der Lage, aus den im natürlichen Speichel des Menschen in übersättigten Konzentrationen vorliegenden Calcium- und Phosphationen abzuscheiden (vgl. Fig. 1 und 2). Diese Nukleationswirkung führt so zur einem Aufbau von neuem Zahnmaterial (Neomineralisierung), insbesondere des Zahnschmelzes und/oder des Dentins, aus den körpereigenen Reservoirs.

Vorteilhafterweise können daher die zuzugebenden Mengen an schwer wasserlöslichem Calciumsalz klein gehalten werden, ohne dass die Re- und Neomineralisierungseffekte sich abschwächt. Das partikuläre Calciumsalz kann also als Kristallisationskeim für die im natürlichen Speichel vorkommenden Calcium- und Phosphationen wirken.

## Patentansprüche

1. Süßigkeit, **dadurch gekennzeichnet, dass** sie Komposite aus schwer wasserlöslichem Calciumsalz und einer Proteinkomponente enthält, wobei das schwer wasserlösliche Calciumsalz eine Teilchengröße von 5 bis 300 nm aufweist und ausgewählt ist aus Fluorapatit, Hydroxylapatit und Fluordotiertem Hydroxylapatit.

2. Süßigkeit nach Anspruch 1, **dadurch gekennzeichnet, dass** das schwer wasserlösliche Calciumsalz eine Teilchengröße von 5 bis 100 nm aufweist.

3. Süßigkeit nach einem der vorstehenden Ansprüche, **dadurch gekennzeichnet, dass** das schwer wasserlösliche Calciumsalz in Form von stäbchenförmigen Kristallen vorliegt.

4. Süßigkeit nach einem der vorstehenden Ansprüche, **dadurch gekennzeichnet, dass** sie von 0,01 bis 2 Gew.-%, insbesondere von 0,1 bis 1 Gew.-% Komposite enthält.

5. Süßigkeit nach einem der vorstehenden Ansprüche, **dadurch gekennzeichnet, dass** die Proteinkomponente ausgewählt ist aus Gelatine, Casein oder deren Hydrolysaten, insbesondere Gelatine.

6. Süßigkeit nach einem der vorstehenden Ansprüche, **dadurch gekennzeichnet, dass** sie Zucker und/oder Zuckeraustauschstoffe enthält.

7. Süßigkeit nach einem der vorstehenden Ansprüche, **dadurch gekennzeichnet, dass** die Süßigkeit zur Gruppe der Zuckerwaren gehört.

8. Süßigkeit nach Anspruch 7, **dadurch gekennzeichnet, dass** die Süßigkeit eine Karamelle oder ein Dragée ist.

9. Süßigkeit nach einem der vorstehenden Ansprüche, **dadurch gekennzeichnet, dass** die Süßigkeit gefüllt ist.

10. Süßigkeit nach Anspruch 9, **dadurch gekennzeichnet, dass** die Füllung die Komposite enthält.

11. Süßigkeit nach Anspruch 10, **dadurch gekennzeichnet, dass** die Süßigkeit ein gefüllter Kaugummi ist.

12. Süßigkeit nach einem der vorstehenden Ansprüche, **dadurch gekennzeichnet, dass** die Süßigkeit eine sich auflösende Komponente (Matrix) umfasst.

13. Süßigkeit nach Anspruch 12, **dadurch gekennzeichnet, dass** sich in der sich auflösenden Komponente (Matrix) die Komposite befinden.

14. Süßigkeit nach Anspruch 12 oder 13, **dadurch gekennzeichnet, dass** die Süßigkeit aus der sich auflösenden Komponente besteht.

15. Süßigkeit nach einem der vorstehenden Ansprüche, **dadurch gekennzeichnet, dass** sie zusätzlich Fluoridsalze enthält.

16. Süßigkeit nach einem der vorstehenden Ansprüche, **dadurch gekennzeichnet, dass** sie Aromastoffe, Süßstoffe, Füllstoffe und/oder weitere Hilfsstoffe enthält.

17. Verwendung von Kompositen aus schwer wasserlöslichem Calciumsalz und einer Proteinkomponente, wobei das schwer wasserlösliche Calciumsalz eine Teilchengröße von 5 bis 300 nm aufweist und ausgewählt ist aus Fluorapatit, Hydroxylapatit und Fluordotiertem Hydroxylapatit, in Süßigkeit, insbesondere in Zuckerwaren, als Inhaltsstoff mit positiver Wirkung auf die Zahngesundheit.

## Claims

1. Sweet, **characterized in that** it contains composites of sparingly water-soluble calcium salt and a protein component, wherein the sparingly water-soluble calcium salt has a particle size of 5 to 300 nm and is selected from fluoroapatite, hydroxylapatite and fluorine-doped hydroxylapatite.

2. Sweet according to Claim 1, **characterized in that** the sparingly water-soluble calcium salt has a particle size of 5 to 100 nm.

3. Sweet according to one of the preceding claims, **characterized in that** the sparingly water-soluble calcium salt is present in the form of rod-shaped crystals.

4. Sweet according to one of the preceding claims, **characterized in that** it contains 0.01 to 2% by weight, in particular 0.1 to 1% by weight, composite.

5. Sweet according to one of the preceding claims, **characterized in that** the protein component is selected from gelatine, casein or hydrolyzates thereof, in particular gelatine.

6. Sweet according to one of the preceding claims, **characterized in that** it contains sugar and/or sugar replacers.

7. Sweet according to one of the preceding claims, **characterized in that** the sweet belongs to the group of sugar products.

8. Sweet according to Claim 7, **characterized in that** the sweet is a caramel or a dragée.

9. Sweet according to one of the preceding claims, **characterized in that** the sweet is filled.

10. Sweet according to Claim 9, **characterized in that** the filling contains the composites.

11. Sweet according to Claim 10, **characterized in that** the sweet is a filled chewing gum.

12. Sweet according to one of the preceding claims, **characterized in that** the sweet comprises a dissolving component (matrix).

13. Sweet according to Claim 12, **characterized in that** the composites are located in the dissolving component (matrix).

14. Sweet according to Claim 12 or 13, **characterized in that** the sweet consists of the dissolving component.

15. Sweet according to one of the preceding claims, **characterized in that** it additionally contains fluoride salts.

16. Sweet according to one of the preceding claims, **characterized in that** it contains flavourings, sweeteners, fillers and/or further aids.

17. Use of composites made of sparingly water-soluble calcium salt and a protein component, wherein the sparingly water-soluble calcium salt has a particle size of 5 to 300 nm and is selected from fluoroapatite, hydroxylapatite and fluorine-doped hydroxylapatite, in a sweet, in particular in sugar products, as component having a beneficial effect on dental health.

## Revendications

1. Friandise **caractérisée en ce qu'**elle contient des composites de sel de calcium difficilement soluble dans l'eau et d'un composant protéique, où le sel de calcium difficilement soluble dans l'eau présente une taille particulaire de 5 à 300 nm et est choisi parmi la fluorapatite, l'hydroxylapatite et l'hydroxylapatite additionnée de fluor.

2. Friandise selon la revendication 1, **caractérisée en ce que** le sel de calcium difficilement soluble dans l'eau présente une taille particulaire de 5 à 100 nm.

3. Friandise selon l'une des revendications précédentes, **caractérisée en ce que** le sel de calcium difficilement soluble dans l'eau se présente sous forme de cristaux en forme de bâtonnets.

4. Friandise selon l'une des revendications précédentes, **caractérisée en ce qu'**elle contient de 0,01 à 2 % en poids, en particulier de 0,1 à 1 % en poids de composite.

5. Friandise selon l'une des revendications précédentes, **caractérise en ce que** le composant protéique est choisi parmi les gélatines, la caséine ou leurs hydrolysats, en particulier les gélatines.

6. Friandise selon l'une des revendications précédentes, **caractérisée en ce qu'**elle contient des sucres et/ou des produits de substitution du sucre.

7. Friandise selon l'une des revendications précédentes, **caractérisée en ce qu'**elle appartient au groupe des sucreries.

8. Friandise selon la revendication 7, **caractérisée en ce qu'**il s'agit d'un caramel ou d'une dragée.

9. Friandise selon l'une des revendications précédentes, **caractérisée en ce qu'**elle est fourrée.

10. Friandise selon la revendication 9, **caractérisée en ce que** le remplissage contient le composite.

11. Friandise selon la revendication 10, **caractérisée en ce qu'**il s'agit d'une gomme à mâcher fourrée.

12. Friandise selon l'une des revendications précédentes, **caractérisée en ce qu'**elle comprend un composant qui se dissout (matrice).

13. Friandise selon la revendication 12, **caractérisée en ce que** les composites se trouvent dans le composant qui se dissout (matrice).

14. Friandise selon la revendication 12 ou 13, **caractérisée en ce qu'**elle se compose du composant qui se dissout.

15. Friandise selon l'une des revendications précédentes, **caractérisée en ce qu'**elle contient en outre des sels de type fluorure.

16. Friandise selon l'une des revendications précédentes, **caractérisée en ce qu'**elle contient des substances aromatiques, des édulcorants, des matières de remplissage et/ou d'autres adjuvants.

17. Utilisation de composites constitués d'un sel de calcium difficilement soluble dans l'eau et d'un composant protéique, le sel de calcium difficilement soluble dans l'eau présentant une taille particulaire de 5 à 300 nm et étant choisi parmi la fluorapatite, l'hydroxylapatite et l'hydroxylapatite additionnée de fluor, dans une friandise, en particulier dans des sucreries, comme constituants ayant un effet positif sur la santé des dents.
